# EUROPEAN PATENT SPECIFICATION

(11) **EP 0 662 338 B1**
(45) Date of publication and mention of the grant of the patent: **03.05.2000**
(21) Application number: 94203656.7
(22) Date of filing: 16.12.1994
(51) Int. Cl.: B01D 53/02, B01D 53/48, B01D 53/14, B01J 20/26, B01J 20/32

(54) **Use of a porous material for the removal of gaseous impurities from a gas mixture**
Verwendung eines porösen Materials zur Entfernung von gasförmigen Verunreinigungen aus einem Gasgemisch
Utilisation d'un matériau poreux pour l'élimination d'impurétés gazeuses d'un mélange gazeux

(30) Priority: 06.01.1994 NL 9400012
(43) Date of publication of application: 12.07.1995
(73) Proprietor: Akzo Nobel N.V., 6824 BM Arnhem (NL)
(72) Inventor: Schomaker, Elwin, NL-6882 NX Velp (NL); Bos, Johannes, NL-6932 BG Westervoort (NL)
(74) Representative: Schalkwijk, Pieter Cornelis

(56) References cited:
- EP-A- 0 189 606
- NL-A- 7 217 118
- US-A- 3 646 594
- US-A- 4 003 848

## Description

The invention relates to the use of a porous, preferably dimensionally stable material for the removal of gaseous impurities from a gas mixture, selected from the group of H₂S, COS, CS₂, and SO₂, into the pores of which there is incorporated a secondary amine which chemically bonds with the constituents to be removed.
A similar use of porous material incorporating a secondary amine has earlier been described in GB-A-2 049 468. The porous material described in said document comprises mineral carriers which are inert towards secondary amines. Examples of suitable mineral carriers mentioned are pumice, kieselguhr, bauxite, alumina, carbon, or silicates. The particle size preferably is in the range of 0,1 mm to 5 cm. Further, preference is given to particles having an internal porosity of at least 0,1, for example from 0,1 to 0,8. Internal porosity is defined in this case as the ratio of the volume of internal empty space to the actual volume of the particles of solid; internal porosity is measured for example by means of mercury porosimetry.

In actual practice, using the known materials is attended with a wide range of problems connected with, on the one hand, the presence of minerals in the carrier material and, on the other, the hydrophilic nature of both the carrier material and the employed amines. The presence of traces of certain metals in carrier material of mineral origin may catalyse the conversion of CS2 and COS into sulphur. A drawback to the use of hydrophilic amines is that it leads also to the bonding of CO₂. A further drawback consists in that regeneration by means of, e.g, steam stripping, is not readily workable in the case of every gas, for instance in that of CS₂.

The invention now provides for the use of a porous material incorporating in its pores a secondary amine which chemically bonds with the constituents to be removed, which material is easy to regenerate on a commercial scale.

The invention consists in that for the material of the known type mentioned in the opening paragraph use is made of a hydrophobic polymer having pores of an average diameter in the range of 0,1 to 50 µm and the secondary amine has hydrophobic properties which optionally is incorporated into a hydrophobic liquid.

The average pore diameter is determined with advantage using mercury porosimetry in accordance with ASTM D 4284-83.

It must be regarded as extremely surprising that the use of a porous material having both a hydrophobic surface area and an average pore diameter in the indicated range provides a system which can be regenerated by means of, e.g., steam stripping and is so effective as to now render industrial scale use possible.

According to the invention, favourable results are generally obtained when use is made of a porous material where at least 15% of the pores is filled with a liquid composed of secondary amine or a secondary amine-containing liquid.

Optimum results are commonly obtained when use is made of a material where at least 60% of the pores is filled with a liquid composed of secondary amine or a secondary amine-containing liquid.

It has been found that, as a rule, optimum results can be obtained when use is made of a material having an average pore diameter in the range of 0,2 to 15 µm.

The secondary amines to be used according to the invention generally have a low vapour pressure, preference being given to amines having a boiling point of at least 250°C. As a rule, favourable results can be obtained when the secondary amine corresponds to the formula R₁ - NH - R₂, wherein R₁ represents a functionalised or unfunctionalised (ar)aliphatic group with at least 7 carbon atoms and R₂ represents a functionalised or unfunctionalised (ar)alkyl group with at least 3 carbon atoms. Preference is given in this case to secondary amines having a total number of carbon atoms of at least 14. Examples of secondary amines according to the aforementioned formula include dibenzyl amine and ditridecyl amine.
Very favourable results are obtained also when use is made of a secondary amine of the formula R₃ - NH - R₄ - NH-C(O)O - R₅, wherein R₃ represents a functionalised or unfunctionalised (ar)aliphatic group with at least 7 carbon atoms, R₄ represents a functionalised or unfunctionalised alkylene group with at least 2 carbon atoms, and R₅ represents a substituted or unsubstituted alkyl group with at least 2 carbon atoms. These compounds can be obtained by blocking the primary amino group of a compound having a primary as well as a secondary amino group. As examples of suitable blocking agents may be mentioned ethylene carbonate and propylene carbonate. In said formula R₃ preferably is a coco- or C₁₂/C₁₄-alkyl group, R₄ is an alkylene group with 2 to 6, preferably with 2 or 3 carbon atoms, and R₅ is a hydroxyalkyl group with 2 or 3 carbon atoms. Alternatively, it is possible to achieve favourable results by using a secondary amine obtained by converting an alkyl amine with an alkyl(meth)acrylate. As an example of such a compound may be mentioned the reaction product of oleyl amine and butyl acrylate.

While the hydrophobic secondary amine may be incorporated into the pores of the hydrophobic polymer as such, preference is given to material where the secondary amine is dissolved in a hydrophobic liquid. If a regeneratable absorption system is required, the secondary amine and the hydrophobic liquid must both have high thermal, hydrolytic, oxidative, and chemical stability. The glycerol esters of one or more, preferably unsaturated fatty acids may be indicated as examples of a hydrophobic liquid essentially suitable to be used according to the invention, with preference being given to an oil, e.g., palm oil, olive oil, groundnut oil, paraffin oil, fish oil such as herring oil, linseed oil, and, more particularly, soybean oil and/or castor oil. In general, the use of a hydrophobic liquid having one or more tertiary amino groups will be preferred, favourable results being obtained using an alkyl dialkanol amine, more particularly an alkyl diethanol amine, more particularly still a C₁₂/C₁₄-alkyl diethanol amine. Preferably, the equivalency ratio of secondary amino groups to tertiary amino groups is ≤ 1.

The process of preparing from hydrophobic polymers a porous, preferably dimensionally stable material suitable for use according to the invention has been described, int.al., in US-A-4 247 498. Examples of suitable polymers include:
low density polyethylene, high density polyethylene, polypropylene, polystyrene, acrylonitrile-butadiene-styrene terpolymers, styrene-acrylonitrile copolymers, styrene-butadiene copolymers, polybutene, and poly(4-methyl-pentene-1).

Optimum results were obtained by using polymers based on polyolefins, with preference being given to the use of a polypropylene based porous material.

Generally, the porous polymer is employed in the form of grains having an average particle diameter of 0,1 to 10 mm. Alternatively, the polymer may be employed as a granulate and in the form of membranes, fibres which may be hollow or not, etc.
Use in the form of a granulate or powder may be in a packed or fluidised bed. When fibres which may be hollow or not are employed, they are used in the form of fabrics and non-wovens, respectively.

The porous materials filled with secondary amine which, according to the invention, are suitable for the removal of gaseous impurities selected from the group of H₂S, COS, CS₂ and SO₂ may be obtained by filling porous polymers the making of which is described in US-A-4 247 498. However, the preferred material is a variation on one described in GB-A-2 115 425, and is obtainable by dissolving first, 5-90 wt.% of polypropylene with heating, at a temperature beyond the critical demixing temperature Tc, in 10-95 wt.% of a mixture of coco- or C12/C14-alkyl diethanol amine, ditridecyl amine, and triethylene glycol, the mixing ratio being such as will give phase separation on cooling, resulting in a polymer-rich and a polymer-poor phase. On further lowering of the temperature said phase separation structure will be fixed prior to the completion of phase separation due to the polymer vitrifying or crystallising, resulting in a porous polymer material filled with one or more of the above compounds and pre-eminently suited to be used according to the invention, either as such or after a reduction if so desired.

The polar triethylene glycol is added to prevent the formation, on account of the ditridecyl amine's strongly apolar character, of a waxy instead of a porous structure on cooling. The pore structure can be affected by adding greater or lesser amounts of triethylene glycol.
It has been found the highest absorption capacity for CS₂ is obtained when using an equimolar mixture of the secondary ditridecyl amine and the tertiary C12/C14-alkyl diethanol amine, to which there must further be added about 10 wt.% of triethylene glycol, calculated on the amount of ditridecyl amine and C12/C14-alkyl diethanol amine.

The invention will be further illustrated with reference to the following examples, which, of course, are not to be construed as limiting in any manner the scope thereof.

### Example 1

3,5 g of macroporous polypropylene powder having a porosity of 3 ml/g, composed of particles of an average diameter of 320 µm and an average pore diameter of 6 µm, were filled with 1,56 g of dibenzyl amine and 4,94 g of N,N-bis(2-hydroxyethyl) cocoamine (C₁₂/C₁₄-alkyl diethanol amine).
About 2 g of this material were used to fill a column (length 93 mm, diameter 8,3 mm) in the form of a packed bed.
Next, there was passed over this bed, per minute, 0,4 l of a CS₂-containing air mixture (2,5 g CS₂ per m³).
The CS₂ concentration of the outflowing air was measured continuously with the aid of an infrared detector. As soon as a CS₂ concentration was measured in the outflowing air which exceeded 1% of the inflowing air mixture's CS₂ concentration, the amount of absorbed CS₂ was calculated. The increase in weight corresponded to 1,2 wt.%, calculated on the bed mass.

### Example II

The experiment of Example I was repeated, with the proviso that this time 3,5 g of the macroporous polypropylene powder were filled with 3,1 g of N-oleyl-butyl-3-aminopropanoate and 3,4 g of N,N-bis(2-hydroxyethyl) cocoamine.
After one hour's passage of air the increase in weight of the packed bed was determined, after which the bed was regenerated by being placed in a 90°C oven for half an hour with the passage of 0,4 l of pre-heated nitrogen per minute.
Loading and regeneration were repeated eight times. For each of these experiments the increase in weight after one hour's passage of air is given in the table below.

**Table 1**

| Loading experiment | wt.% of absorbed CS₂ |
|---|---|
| 1 | 3,7 |
| 2 | 3,6 |
| 3 | 3,4 |
| 4 | 2,8 |
| 5 | 3,1 |
| 6 | 2,6 |
| 7 | 2,8 |
| 8 | 2,6 |

### Example III

### a Preparation of the absorption material

The primary amino group of N-coco-1,3-propane diamine was blocked by the addition, at a temperature in the range of 20° to 30°C, of 117,67 g of propylene carbonate to 300 g of this diamine, after which there was stirring at room temperature for a further hour.
Next, 35 g of polypropylene were dissolved in 65 g of the above-mentioned reaction product at a temperature of 240°C. Following cooling and grinding of the solidified mass, amine filled macroporous particles having an average diameter of 400 µm and an average pore diameter of 11 µm were obtained.

### b Use of the material for CS₂ absorption and regeneration

About 2 g of this material were used to fill a column (length 93 mm, diameter 8,3 mm) in the form of a packed bed.
Next, there was passed over this bed, per minute, 0,4 l of an air mixture containing 2,5 g CS₂ per m³.
The CS₂ concentration of the outflowing air was continuously measured with the aid of an infrared detector. As soon as a CS₂ concentration was measured in the outflowing air which exceeded 1% of the inflowing air mixture's CS₂ concentration, the amount of absorbed CS₂ was calculated. The increase in weight corresponded to 3,25 wt.%, calculated on the bed mass. Next, the bed was regenerated by being placed in a 90°C oven for half an hour with the passage of 0,4 l of pre-heated nitrogen per minute.
Subsequently, loading with CS₂ was carried out again, with only 0,2 wt.% of CS₂, calculated on the bed mass, being absorbed.
The regeneration temperature was then increased to 110°C, whereupon loading and regeneration were repeated eight times. For each of these experiments the increase in weight after one hour's passage of air is given in the table below.

**Table 2**

| Loading experiment | wt.% of absorbed CS₂ |
|---|---|
| 1 | 1,9 |
| 2 | 1,5 |
| 3 | 1,4 |
| 4 | 1,75 |
| 5 | 1,5 |
| 6 | 1,7 |
| 7 | 1,75 |
| 8 | 1,8 |

Next, a further five loading/regeneration cycles were performed, this time with air of the same composition as the dry CS₂-containing air mixture but with a relative humidity of 90% (at room temperature) being passed through the bed. Loading and regeneration were repeated five times. For each of these experiments the amount of absorbed CS₂ after one hour's passage of CS₂-containing humid air is given in the table below.

**Table 3**

| Loading experiment | wt.% of absorbed CS₂ |
|---|---|
| 9 | 2,6 |
| 10 | 2,55 |
| 11 | 2,55 |
| 12 | 2,35 |
| 13 | 2,45 |

### Example IV

The experiment of Example I was repeated, with the proviso that this time 3,5 g of the macroporous polypropylene powder were filled with 3,05 g of ditridecyl amine and 3,45 g of N,N-bis(2-hydroxyethyl) cocoamine.

About 2 g of this material were used to fill a column (length 93 mm, diameter 8,3 mm) in the form of a packed bed.
Next, there was passed over this bed, per minute, 0,4 l of a CS₂-containing air mixture (2,5 g CS₂ per m³).
The CS₂ concentration of the outflowing air was continuously measured with the aid of an infrared detector. As soon as a CS₂ concentration was measured in the outflowing air which exceeded 1% of the inflowing air mixture's CS₂ concentration, the amount of absorbed CS₂ was calculated, after which the bed was regenerated by being placed in a 90°C oven for half an hour with the passage of 0,4 l of preheated nitrogen per minute.
Loading and regeneration were repeated eight times. For each of these experiments the weight percentage of absorbed CS₂ calculated on the bed weight, is indicated in the table below.

**Table 4**

| Loading experiment | wt.% of absorbed CS₂ |
|---|---|
| 1 | 3,15 |
| 2 | 2,15 |
| 3 | 2,15 |
| 4 | 1,95 |
| 5 | 1,80 |
| 6 | 1,95 |
| 7 | 1,90 |
| 8 | 1,45 |
| 9 | 1,60 |
| 10 | 1,65 |

Next, the packed bed was regenerated at 110°C. For each of these experiments the weight percentage of absorbed CS₂, calculated on the bed weight, is given in the table below.

**Table 5**

| Loading experiment | wt.%of absorbed CS₂ |
|---|---|
| 11 | 1,70 |
| 12 | 1,60 |

Next, a further three loading/regeneration cycles were performed, this time with air of the same composition as the dry CS₂-containing air mixture but with a relative humidity of 90% (at room temperature) being passed through the bed. Loading and regeneration were repeated three times. For each of these experiments the weight percentage of absorbed CS₂, calculated on the bed weight, is given in the table below.

**Table 6**

| Loading experiment | wt.% of absorbed CS₂ |
|---|---|
| 13 | 2,0 |
| 14 | 2,1 |
| 15 | 2,2 |

### Example V

### a Preparation of the absorption material

At a temperature of 250°C, 30 g of polypropylene were dissolved in 36 g of ditridecyl amine, 7 g of triethylene glycol, and 27 g of N,N-bis(2-hydroxyethyl) cocoamine and homogenised until a clear solution was obtained. Following cooling and grinding of the solidified mass, amine filled macroporous particles having an average diameter of 350 µm and an average pore diameter of 5 µm were obtained.

### b Use of the material for CS₂ absorption and regeneration

About 2 g of this material were used to fill a column (length 93 mm, diameter 8,3 mm) in the form of a packed bed.
Next, there was passed over this bed, per minute, 0,4 l of a CS₂-containing air mixture (2,5 g CS₂ per m³).
The CS₂ concentration of the outflowing air was continuously measured with the aid of an infrared detector. As soon as a CS₂ concentration was measured in the outflowing air which exceeded 1% of the inflowing air mixture's CS₂ concentration, the amount of absorbed CS₂ was calculated. Next, the bed was regenerated by being placed in a 110°C oven for half an hour with the passage of 0,4 l of pre-heated nitrogen per minute.
In all, six experiments were carried out using the same packed bed. For each of these experiments the weight percentage of absorbed CS₂, calculated on the bed weight, is given in the table below.

**Table 7**

| Loading experiment | wt.% of absorbed CS₂ |
|---|---|
| 1 | 3,95 |
| 2 | 3,50 |
| 3 | 3,50 |
| 4 | 3,75 |
| 5 | 3,80 |
| 6 | 4,10 |

### Example VI

The experiment of Example V was repeated, with the proviso that there was passed over the bed 0,28 l/minute of a humid air mixture containing 0,45 g CS₂ per m³.
The CS₂ concentration of the outflowing air was continuously measured with the aid of an infrared detector. As soon as a CS₂ concentration was measured in the outflowing air which exceeded 1% of the inflowing air mixture's CS₂ concentration, the amount of absorbed CS₂ was calculated. At that moment 2,2 wt.% of CS₂ had been absorbed by the bed.

### Example VII

The experiment of Example VI was repeated, with the proviso that this time the rate of flow of the air mixture was 2 l per minute. The CS₂ concentration of the outflowing air was continuously measured with the aid of an infrared detector. As soon as a CS₂ concentration was measured in the outflowing air which exceeded 1% of the inflowing air mixture's CS₂ concentration, the amount of absorbed CS₂ was calculated. At that moment 2,1 wt.% of CS₂ had been absorbed by the bed.

### Example VIII

The experiment of Example V was repeated, with the proviso that this time 0,4 l per minute of an air mixture containing 1,8 wt.% of CO₂ was passed over the bed. The CO₂ concentration of the outflowing air was measured with the aid of an infrared detector. It was found that no CO₂ was absorbed.

## Claims

1. Use of a porous material for the removal of gaseous impurities from a gas mixture, selected from the group of H₂S, COS, CS₂, and SO₂, into the pores of which there is incorporated a secondary amine which chemically bonds with the constituents to be removed, characterised in that the material comprises a hydrophobic polymer having pores of an average diameter in the range of 0,1 to 50 µm and the secondary amine has hydrophobic properties.

2. Use according to claim 1, characterised in that the secondary amine is incorporated into a hydrophobic liquid.

3. Use according to claim 1, characterised in that the average diameter of the pores is in the range of 0,2 to 15 µm.

4. Use according to claim 1, characterised in that at least 15% of the pores is filled with a liquid composed of secondary amine or a secondary amine-containing liquid.

5. Use according to claim 1, characterised in that at least 60% of the pores is filled with a liquid composed of secondary amine or a secondary amine-containing liquid.

6. Use according to claim 1, characterised in that the secondary amine corresponds to the formula R₁ - NH - R₂, wherein R₁ represents a functionalised or unfunctionalised (ar)aliphatic group with at least 7 carbon atoms and R₂ represents a functionalised or unfunctionalised (ar)alkyl group with at least 3 carbon atoms.

7. Use according to claim 6, characterised in that the secondary amine is dibenzyl amine.

8. Use according to claim 6, characterised in that the secondary amine is ditridecyl amine.

9. Use according to claim 1, characterised in that the secondary amine is a compound of the formula R₃ - NH - R₄ - NH-C(O)O - R₅, wherein R₃ represents a functionalised or unfunctionalised (ar)aliphatic group with at least 7 carbon atoms, R₄ represents a functionalised or unfunctionalised alkylene group with at least 2 carbon atoms, and R₅ represents a substituted or unsubstituted alkyl group with at least 2 carbon atoms.

10. Use according to one or more of the preceding claims, characterised in that a tertiary amine is part of the hydrophobic liquid.

11. Use according to claim 10, characterised in that the tertiary amine is alkyl dialkanol amine.

12. Use according to claim 10, characterised in that the tertiary amine is alkyl diethanol amine.

13. Use according to claim 10, characterised in that the tertiary amine is C12/C14-alkyl diethanol amine.

14. Use according to claim 1, characterised in that the hydrophobic polymer is a polyolefin.

15. Use according to claim 14, characterised in that the polyolefin is polypropylene.

16. Use of a porous material for the removal of gaseous impurities from a gas mixture, selected from the group of H₂S, COS, CS₂, and SO₂, into the pores of which there is incorporated a secondary amine which chemically bonds with the constituents to be removed, obtainable by first dissolving 5-90 wt.% of polypropylene with heating, at a temperature beyond the critical demixing temperature Tc, in 10-95 wt.% of a mixture of coco- or C12/C14-alkyl diethanol amine and triethylene glycol, the mixing ratio being such as will give phase separation on cooling, resulting in a polymer-rich and a polymer-poor phase, followed by mechanical reduction of the mass solidified by further cooling.

## Patentansprüche

1. Verwendung eines porösen Materials zur Entfernung von gasförmigen Verunreinigungen aus einer Gasmischung gewählt aus der Gruppe H₂S, COS, CS₂ und SO₂, in dessen Poren ein sekundäres Amin eingearbeitet ist, das mit den zu entfernenden Komponenten chemisch bindet, dadurch gekennzeichnet, dass das Material ein hydrophobes Polymer enthält, das Poren mit einem mittleren Durchmesser im Bereich von 0,1 bis 50 µm aufweist und das sekundäre Amin hydrophobe Eigenschaften hat.

2. Verwendung nach Anspruch 1, dadurch gekennzeichnet, dass das sekundäre Amin einer hydrophoben Flüssigkeit einverleibt ist.

3. Verwendung nach Anspruch 1, dadurch gekennzeichnet, dass der mittlere Porendurchmesser im Bereich von 0,2 bis 15 µm liegt.

4. Verwendung nach Anspruch 1, dadurch gekennzeichnet, dass mindestens 15% Poren mit einer Flüssigkeit gefüllt sind, die aus einem sekundären Amin oder einer ein sekundäres Amin enthaltenden Flüssigkeit zusammengesetzt ist.

5. Verwendung nach Anspruch 1, dadurch gekennzeichnet, dass mindestens 60% der Poren mit einer Flüssigkeit gefüllt sind, die aus einem sekundären Amin oder einer ein sekundäres Amin enthaltenden Flüssigkeit zusammengesetzt ist.

6. Verwendung nach Anspruch 1, dadurch gekennzeichnet, dass das sekundäre Amin der Formel R₁-NH-R₂ entspricht, worin R₁ eine funktionalisierte oder nicht funktionalisierte (ar)aliphatische Gruppe mit mindestens 7 Kohlenstoffatomen und R₂ eine funktionalisierte oder nicht funktionalisierte (Ar)alkylgruppe mit mindestens 3 Kohlenstoffatomen darstellt.

7. Verwendung nach Anspruch 6, dadurch gekennzeichnet, dass das sekundäre Amin Dibenzylamin ist.

8. Verwendung nach Anspruch 6, dadurch gekennzeichnet, dass das sekundäre Amin Ditridecylamin ist.

9. Verwendung nach Anspruch 1, dadurch gekennzeichnet, dass das sekundäre Amin eine Verbindung der Formel R₃-NH-R₄-NH-C(O)O-R₅ ist, worin R₃ eine funktionalisierte oder nicht funktionalisierte (ar)aliphatische Gruppe mit mindestens 7 Kohlenstoffatomen, R₄ eine funktionalisierte oder nicht funktionalisierte Alkylengruppe mit mindestens zwei Kohlenstoffatomen und R₅ eine substituierte oder nicht substituierte Alkylgruppe mit mindestens zwei Kohlenstoffatomen darstellt.

10. Verwendung nach einem oder mehreren der vorangehenden Ansprüche, dadurch gekennzeichnet, dass ein tertiäres Amin Teil der hydrophoben Flüssigkeit ist.

11. Verwendung nach Anspruch 10, dadurch gekennzeichnet, dass das tertiäre Amin Alkyldialkanolamin ist.

12. Verwendung nach Anspruch 10, dadurch gekennzeichnet, dass das tertiäre Amin Alkyldiethanolamin ist.

13. Verwendung nach Anspruch 10, dadurch gekennzeichnet, dass das tertiäre Amin C₁₂-C₁₄-Alkyldiethanolamin ist.

14. Verwendung nach Anspruch 1, dadurch gekennzeichnet, dass das hydrophobe Polymer ein Polyolefin ist.

15. Verwendung nach Anspruch 14, dadurch gekennzeichnet, dass Polyolefin Polypropylen ist.

16. Verwendung eines porösen Materials zur Entfernung von gasförmigen Verunreinigungen aus einer Gasmischung, gewählt aus der Gruppe H₂S, COS, CS₂ und SO₂, in dessen Poren ein sekundäres Amin eingearbeitet ist, das chemisch mit den zu entfernenden Komponenten bindet, erhältlich dadurch, dass man zunächst 5 bis 90 Gew.% Polypropylen unter Erwärmen auf eine Temperatur unter der kritischen Entmischungstemperatur Tc in 10 bis 95 Gew.% einer Mischung aus Kokos- oder C₁₂-C₁₄-Alkyldiethanolamin und Triethylenglycol mit einem solchen Mischverhältnis löst, dass beim Abkühlen eine Phasentrennung erfolgt, die eine an Polymer reichen und eine an Polymer armen Phase ergibt, gefolgt von einer mechanischen Zerkleinerung der durch weiteres Kühlen verfestigten Masse.

## Revendications

1. Utilisation d'un matériau poreux pour l'élimination d'impuretés gazeuses d'un mélange gazeux, choisies dans le groupe de H₂S, COS, CS₂, et SO₂, dans les pores duquel est incorporée une amine secondaire qui se lie chimiquement aux constituants qui doivent être éliminés, caractérisée en ce que le matériau comprend un polymère hydrophobe pourvu de pores d'un diamètre moyen dans la plage de 0;1 à 50 µm et en ce que l'amine secondaire possède des propriétés hydrophobes.

2. L'utilisation selon la revendication 1, caractérisée en ce que l'amine secondaire est incorporée dans un liquide hydrophobe.

3. L'utilisation selon la revendication 1, caractérisée en ce que le diamètre moyen des pores est dans la plage de 0,2 à 15 µm.

4. L'utilisation selon la revendication 1, caractérisée en ce qu'au moins 15 % des pores sont remplis avec un liquide composé d'une amine secondaire ou d'un liquide contenant une amine secondaire.

5. L'utilisation selon la revendication 1, caractérisée en ce qu'au moins 60 % des pores sont remplis avec un liquide composé d'une amine secondaire ou d'un liquide contenant une amine secondaire.

6. L'utilisation selon la revendication 1, caractérisée en ce que l'amine secondaire correspond à la formule R₁ - NH - R₂, dans laquelle R₁ représente un groupe (ar)aliphatique fonctionnalisé ou non fonctionnalisé ayant au moins 7 atomes de carbone et R₂ représente un groupe (ar)alkyle fonctionnalisé ou non fonctionnalisé ayant au moins 3 atomes de carbone.

7. L'utilisation selon la revendication 6, caractérisée en ce que l'amine secondaire est une dibenzylamine.

8. L'utilisation selon la revendication 6, caractérisée en ce que l'amine secondaire est une ditridécylamine.

9. L'utilisation selon la revendication 1, caractérisée en ce que l'amine secondaire est un composé de formule R₃ - NH - R₄ - NH-C(O)O - R₅, dans laquelle R₃ représente un groupe (ar)aliphatique fonctionnalisé ou non fonctionnalisé ayant au moins 7 atomes de carbone, R₄ représente un groupe alcoylène fonctionnalisé ou non fonctionnalisé ayant au moins 2 atomes de carbone, et R₅ représente un groupe alkyle substitué ou non substitué ayant au moins 2 atomes de carbone.

10. L'utilisation selon une ou plusieurs des revendications précédentes, caractérisée en ce qu'une amine tertiaire fait partie du liquide hydrophobe.

11. L'utilisation selon la revendication 10, caractérisée en ce que l'amine tertiaire est une dialcanol alkylamine.

12. L'utilisation selon la revendication 10, caractérisée en ce que l'amine tertiaire est une diéthanol alkylamine.

13. L'utilisation selon la revendication 10, caractérisée en ce que l'amine tertiaire est une diéthanol alkyl C₁₂/C₁₄-amine.

14. L'utilisation selon la revendication 1, caractérisée en ce que le polymère hydrophobe est une polyoléfine.

15. L'utilisation selon la revendication 14, caractérisée en ce que la polyoléfine est le polypropylène.

16. Utilisation d'un matériau poreux pour l'élimination d'impuretés gazeuses d'un mélange gazeux, choisies dans le groupe de H₂S, COS, CS₂, et SO₂, dans les pores duquel est incorporée une amine secondaire qui se lie chimiquement aux constituants qui doivent être éliminés, pouvant être obtenu en dissolvant d'abord 5 à 90 % en poids de polypropylène, sous chauffage, à une température supérieure à la température de démixtion critique, Tc, dans 10 à 95 % en poids d'un mélange de coco- ou de diéthanol alkyl C₁₂/C₁₄-amine, et de triéthylène glycol, le rapport de mélange étant apte à induire une séparation des phases après les refroidissement, pour donner une phase riche en polymère et une phase pauvre en polymère, suivi par la réduction mécanique de la masse solidifiée par la poursuite du refroidissement.
